(19) Europäisches Patentamt
European Patent Office
Office européen des brevets

(11) **EP 4 518 427 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
*H04W 36/00* (2009.01)

(21) Application number: 22939386.3

(86) International application number:
PCT/CN2022/090683

(22) Date of filing: 29.04.2022

(87) International publication number:
WO 2023/206540 (02.11.2023 Gazette 2023/44)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **ZHAO, Qun**
**Beijing 100085 (CN)**

(74) Representative: **König, Andreas Rudolf et al**
**Schoppe, Zimmermann, Stöckeler
Zinkler, Schenk & Partner mbB
Patentanwälte
Radlkoferstraße 2
81373 München (DE)**

(54) **UPLINK TRANSMISSION METHOD AND DEVICE, AND STORAGE MEDIUM**

(57) The present invention provides an uplink transmission method and device, and a storage medium. The uplink transmission method comprises: when a terminal supports uplink transmission switching on a plurality of frequency bands, determining whether a switching gap is required between two adjacent uplink transmissions of the terminal, wherein the total number of the frequency bands is greater than 2. In the present disclosure, when the terminal supports uplink transmission switching among multiple frequency bands, and the total number of plurality of frequency bands is greater than 2. According to the present invention, when the terminal supports uplink transmission switching on a plurality of frequency bands, wherein the total number of the plurality of frequency bands is greater than 2, the terminal and a base station can determine, on the basis of the same principle, whether a switching duration is required between two adjacent uplink transmissions of the terminal, so that the terminal and the base station are ensured to be consistent in understanding, the flexibility of network deployment and scheduling is improved, the uplink transmission switching enhancement is achieved in an NR system, and the availability is high.

whether a switching gap is required between two adjacent uplink transmissions of the terminal is determined, in a case where the terminal supports uplink transmissions switching among multiple frequency bands — 301

FIG. 3

## Description

### TECHNICAL FIELD

The present disclosure relates to the field of communication technologies, and provides an uplink transmission method, an uplink transmission device, and a storage medium.

### BACKGROUND

Currently, a terminal supports transmitting up to 2 transmissions (Transmit, TX) when performing uplink transmission. In the Release-18 (Rel-18) multicarrier enhancement project, it is determined to enhance uplink (UL) TX switching. Specifically, the terminal supports UL TX switching among 3 or 4 frequency bands.

When a terminal performs UL Tx switching among multiple frequency bands, a base station may have a problem of being unable to determine whether a Tx chain on a terminal side needs to be switched, resulting in inconsistent understanding between the base station side and the terminal side.

### SUMMARY

In order to overcome the problem existing in related technologies, embodiments of the present disclosure provide an uplink transmission method and device, and a storage medium.

According to a first aspect, an uplink transmission method is provided according to an embodiment of the present disclosure. The method is applied to a terminal and includes:

determining whether a switching gap is required between two adjacent uplink transmissions of the terminal, in a case where the terminal supports uplink transmission switching among a plurality of frequency bands, where a total number of the plurality of frequency bands is greater than 2.

Optionally, the determining whether the switching gap is required between the two adjacent uplink transmissions of the terminal includes:

determining whether the switching gap is required between the two adjacent uplink transmissions of the terminal based on an association relationship between a reference frequency band pair and an uplink transmission chain, where the reference frequency band pair includes one or two of the plurality of frequency bands.

Optionally, the method further includes:

determining the reference frequency band pair;
determining the association relationship based on the reference frequency band pair; and
reporting the association relationship to a base station.

Optionally, the method further includes:

receiving indication information transmitted by a base station, where the indication information is used to indicate the reference frequency band pair; and
determining the association relationship based on the reference frequency band pair indicated by the indication information.

Optionally, the receiving the indication information transmitted by the base station includes:

receiving the indication information transmitted by the base station through a radio resource control (RRC) signaling; or
receiving the indication information transmitted by the base station through a media access control control element (MAC CE) signaling.

Optionally, the determining the association relationship includes:

determining the association relationship based on a first reference frequency band pair, in a case where an uplink transmission is performed in a first frequency band included in the first reference frequency band pair, where the first reference frequency band pair is any one frequency band pair of the reference frequency band pair.

Optionally, the determining the association relationship based on the first reference frequency band pair includes:

determining that an uplink transmission chain corresponding to the first reference frequency band pair operates in the first frequency band; and
determining that another uplink transmission chain corresponding to the first reference frequency band pair operates in a second frequency band included in the first reference frequency band pair.

Optionally, the determining whether the switching gap is required between the two adjacent uplink transmissions of the terminal based on the association relationship between the reference frequency band pair and the uplink transmission chain includes:
determining that the switching gap is not required between the two adjacent uplink transmissions of the terminal in a case where frequency bands in which the two adjacent uplink transmissions of the terminal are located belong to the same frequency band pair of the reference frequency band pair.

Optionally, the determining that the switching gap is not required between the two adjacent uplink transmissions of the terminal in a case where the frequency bands in which the two adjacent uplink transmissions of the terminal are located belong to the same frequency band pair of the reference frequency band pair includes:

determining that the switching gap is not required between the two adjacent uplink transmissions of the terminal in a case where the two adjacent uplink transmissions of the terminal are located in the same frequency band, and the same frequency band belongs to any one frequency band pair of the reference frequency band pair; or
determining that the switching gap is not required between the two adjacent uplink transmissions of the terminal in a case where the two adjacent uplink transmissions of the terminal are located in two different frequency bands, and the two different frequency bands belong to the same frequency band pair of the reference frequency band pair.

Optionally, the determining whether the switching gap is required between the two adjacent uplink transmissions of the terminal based on the association relationship between the reference frequency band pair and the uplink transmission chain includes:

determining that the switching gap is required between the two adjacent uplink transmissions of the terminal in a case where the two adjacent uplink transmissions of the terminal are located in two different frequency bands, and the two different frequency bands do not belong to the same frequency band pair of the reference frequency band pair; or
determining that the switching gap is required between the two adjacent uplink transmissions of the terminal in a case where the two adjacent uplink transmissions of the terminal are located in the same frequency band, the same frequency band belongs to any one frequency band pair of the reference frequency band pair, and a correspondence between the same frequency band and the uplink transmission chain changes.

Optionally, the method further includes:
determining that the correspondence changes in a case where a number of uplink transmission chains corresponding to the same frequency band changes.

Optionally, the determining whether the switching gap is required between the two adjacent uplink transmissions of the terminal based on the association relationship between the reference frequency band pair and the uplink transmission chain includes:
determining that the switching gap is required between the two adjacent uplink transmissions of the terminal in a case where there are a plurality of reference frequency band pairs, and a reference frequency band pair corresponding to the two adjacent uplink transmissions of the terminal changes.

Optionally, the method further includes:
determining that the terminal does not expect simultaneous uplink transmissions on two or more frequency bands among the plurality of frequency bands.

Optionally, the determining whether the switching gap is required between the two adjacent uplink transmissions of the terminal includes:

determining that the switching gap is required between the two adjacent uplink transmissions of the terminal in a case where frequency bands for the two adjacent uplink transmissions of the terminal are different; or
determining that the switching gap is required between the two adjacent uplink transmissions of the terminal in a case where frequency bands for the two adjacent uplink transmissions of the terminal are the same, and numbers of ports used for the two adjacent uplink transmissions are different.

Optionally, the determining whether the switching gap is required between the two adjacent uplink transmissions of the terminal includes:
determining that the switching gap is not required between the two adjacent uplink transmissions of the terminal in a case where frequency bands for the two adjacent uplink transmissions of the terminal are the same.

Optionally, numbers of ports used for the two adjacent uplink transmissions of the terminal are the same or different.

According to a second aspect, an uplink transmission method is provided according to an embodiment of the present disclosure. The method is applied to a base station, and includes:

determining whether a switching gap is required between two adjacent uplink transmissions of a terminal in a case where the terminal supports uplink transmission switching among a plurality of frequency bands, where a total number of the plurality of frequency bands is greater than 2.

Optionally, the determining whether the switching gap is required between the two adjacent uplink transmissions of the terminal includes:

determining whether the switching gap is required between the two adjacent uplink transmissions of the terminal based on an association relationship between a reference frequency band pair and an uplink transmission chain, where the reference frequency band pair includes one or two of the plurality of frequency bands.

Optionally, the method further includes:

receiving the association relationship reported by the terminal.

Optionally, the method further includes:

transmitting indication information to the terminal, where the indication information is used to indicate the reference frequency band pair; and
determining the association relationship based on the reference frequency band pair indicated by the indication information.

Optionally, the transmitting the indication information to the terminal includes:

transmitting the indication information to the terminal through a radio resource control (RRC) signaling; or
transmitting the indication information to the terminal through a media access control control element (MAC CE) signaling.

Optionally, the determining the association relationship includes:

determining the association relationship based on a first reference frequency band pair in a case where an uplink transmission is performed by the terminal through a first frequency band included in the first reference frequency band pair, where the first reference frequency band pair is any one frequency band pair of the reference frequency band pair.

Optionally, the determining the association relationship based on the first reference frequency band pair includes:

determining that an uplink transmission chain corresponding to the first reference frequency band pair operates in the first frequency band; and
determining that another uplink transmission chain corresponding to the first reference frequency band pair operates in a second frequency band included in the first reference frequency band pair.

Optionally, the determining whether the switching gap is required between the two adjacent uplink transmissions of the terminal based on the association relationship between the reference frequency band pair and the uplink transmission chain includes:

determining that the switching gap is not required between the two adjacent uplink transmissions of the terminal in a case where frequency bands in which the two adjacent uplink transmissions of the terminal are located belong to the same frequency band pair of the reference frequency band pair.

Optionally, the determining that the switching gap is not required between the two adjacent uplink transmissions of the terminal in a case where the frequency bands in which the two adjacent uplink transmissions of the terminal are located belong to the same frequency band pair of the reference frequency band pair includes:

determining that the switching gap is not required between the two adjacent uplink transmissions of the terminal in a case where the two adjacent uplink transmissions of the terminal are located in the same frequency band, and the same frequency band belongs to any one frequency band pair of the reference frequency band pair; or
determining that the switching gap is not required between the two adjacent uplink transmissions of the terminal in a case where the two adjacent uplink transmissions of the terminal are located in two different frequency bands, and the two different frequency bands belong to the same frequency band pair of the reference frequency band pair.

Optionally, the determining whether the switching gap is required between the two adjacent uplink transmissions of the terminal based on the association relationship between the reference frequency band pair and the uplink transmission chain includes:

determining that the switching gap is required between the two adjacent uplink transmissions of the terminal in a case where the two adjacent uplink transmissions of the terminal are located in two different frequency bands, and the two different frequency bands do not belong to the same frequency band pair of the reference frequency band pair; or determining that the switching gap is required between the two adjacent uplink transmissions of the terminal in a case where the two adjacent uplink transmissions of the terminal are located in the same frequency band, the same frequency band belongs to any one frequency band pair of the reference frequency band pair, and a correspondence between the same frequency band and the uplink transmission chain changes.

Optionally, the method further includes:
determining that the correspondence changes, in a case where a number of uplink transmission chains corresponding to the same frequency band changes.

Optionally, the determining whether the switching gap is required between the two adjacent uplink transmissions of the terminal based on the association relationship between the reference frequency band pair and the uplink transmission chain includes:
determining that the switching gap is required between the two adjacent uplink transmissions of the terminal in a case where there are a plurality of reference frequency band pairs, and a reference frequency band pair corresponding to the two adjacent uplink transmissions of the terminal changes.

Optionally, the method further includes:
determining that time domain resources occupied by any two frequency bands among the plurality of frequency bands do not overlap.

Optionally, the determining whether the switching gap is required between the two adjacent uplink transmissions of the terminal includes:

determining that the switching gap is required between the two adjacent uplink transmissions of the terminal in a case where frequency bands for the two adjacent uplink transmissions of the terminal are different; or determining that the switching gap is required between the two adjacent uplink transmissions of the terminal in a case where frequency bands for the two adjacent uplink transmissions of the terminal are the same, and numbers of ports used for the two adjacent uplink transmissions are different.

Optionally, the determining whether the switching gap is required between the two adjacent uplink transmissions of the terminal includes:
determining that the switching gap is not required between the two adjacent uplink transmissions of the terminal in a case where frequency bands for the two adjacent uplink transmissions of the terminal are the same.

Optionally, numbers of ports used for the two adjacent uplink transmissions of the terminal are the same or different.

According to a third aspect, an uplink transmission device is provided according to an embodiment of the present disclosure. The device is applied to a terminal, and includes:
a first determination module, configured to determine whether a switching gap is required between two adjacent uplink transmissions of the terminal, in a case where the terminal supports uplink transmission switching among a plurality of frequency bands, where a total number of the plurality of frequency bands is greater than 2.

According to a fourth aspect, an uplink transmission device is provided according to an embodiment of the present disclosure. The device is applied to a base station, and includes:
a second determination module, configured to determine whether a switching gap is required between two adjacent uplink transmissions of a terminal in a case where the terminal supports uplink transmission switching among a plurality of frequency bands, where a total number of the plurality of frequency bands is greater than 2.

According to a fifth aspect, a computer-readable storage medium is provided according to an embodiment of the present disclosure. The storage medium stores a computer program, and the computer program is configured to execute any of the above uplink transmission method on the side of the terminal.

According to a sixth aspect, a computer-readable storage medium is provided according to an embodiment of the present disclosure. The storage medium stores a computer program, and the computer program is configured to execute any of the above uplink transmission method on the side of the base station.

According to a seventh aspect, an uplink transmission device is provided according to an embodiment of the present disclosure, including:

a processor; and
a memory configured to store instructions executable by the processor,

where the processor is configured to execute any of the above uplink transmission method on the side of the terminal.

According to an eighth aspect, an uplink transmission device is provided according to an embodiment of the present disclosure, including:

a processor; and
a memory configured to store instructions executable by the processor,
where the processor is configured to execute any of the above uplink transmission method on the side of the base station.

The technical solutions provided by the embodiments of the present disclosure may include the following beneficial effects.

According to some embodiments of the present disclosure, in a case where the terminal supports uplink transmission switching among multiple frequency bands, and the total number of multiple frequency bands is greater than 2, the terminal and the base station can determine whether the switching gap is required or not between the two adjacent uplink transmissions of the terminal based on the same rule, which ensures consistent understanding between the terminal and the base station, and improves the flexibility of network deployment and scheduling. In the NR system, the uplink transmission switching is enhanced and the availability is high.

It should be appreciated that the foregoing general descriptions and the following detailed descriptions are just exemplary and explanatory, and do not limit the present disclosure.

## BRIEF DESCRIPTION OF THE DRAWINGS

The accompanying drawings are incorporated in and constitute a part of this specification, illustrate embodiments consistent with the present disclosure and together with the description serve to explain the principles of the present disclosure.

FIG. 1 is a schematic diagram of a transmission chain according to an exemplary embodiment.
FIG. 2A is a schematic diagram of uplink transmission switching in an EN-DC scenario according to an exemplary embodiment.
FIG. 2B is a schematic diagram of uplink transmission switching in an Inter-band CA scenario according to an exemplary embodiment.
FIG. 2C is a schematic diagram of uplink transmission switching in an SUL scenario according to an exemplary embodiment.
FIG. 3 is a schematic flow chart of an uplink transmission method according to an exemplary embodiment.
FIG. 4 is a schematic flow chart of another uplink transmission method according to an exemplary embodiment.
FIG. 5 is a schematic flow chart of another uplink transmission method according to an exemplary embodiment.
FIG. 6 is a schematic flow chart of another uplink transmission method according to an exemplary embodiment.
FIG. 7 is a schematic flow chart of another uplink transmission method according to an exemplary embodiment.
FIG. 8 is a schematic flow chart of an uplink transmission method according to an exemplary embodiment.
FIG. 9 is a schematic flow chart of another uplink transmission method according to an exemplary embodiment.
FIG. 10 is a schematic flow chart of another uplink transmission method according to an exemplary embodiment.
FIG. 11 is a schematic flow chart of another uplink transmission method according to an exemplary embodiment.
FIG. 12 is a schematic flow chart of another uplink transmission method according to an exemplary embodiment.
FIG. 13 is a block diagram of an uplink transmission device according to an exemplary embodiment.
FIG. 14 is a block diagram of another uplink transmission device according to an exemplary embodiment.
FIG. 15 is a schematic structural diagram of an uplink transmission device according to an exemplary embodiment of the present disclosure.
FIG. 16 is a schematic structural diagram of another uplink transmission device according to an exemplary embodiment of the present disclosure.

## DETAILED DESCRIPTION

Exemplary embodiments will be described in detail herein, examples of which are illustrated in the accompanying drawings. When the following description refers to the drawings, the same reference numbers in different drawings refer to the same or similar elements unless otherwise indicated. The implementations described in the following exemplary embodiments do not represent all implementations consistent with the present disclosure. Rather, they are merely examples of device and methods consistent with some aspects of the present disclosure as detailed in the appended claims.

The terminology used in the present disclosure is for the purpose of only describing particular embodiments and is not intended to limiting the present disclosure. The singular forms "a", "the", and "this" as used in the present disclosure and the appended claims are intended to include the plural forms as well, unless the context clearly dictates otherwise. It will also be appreciated that the term "and/or" as used herein refers to and includes any and all possible combinations of one or more of the associated listed items.

It should be appreciated that although such terms as first, second and third may be used in the present disclosure to describe various information, the information should not be limited to these terms. These terms are only used to distinguish information of the same type from each other. For example, without departing from the scope of the present disclosure, the first information may also be referred to as the second information, and similarly, the second information may also be referred to as the first information. Depending on the context, for example, the word "if" as used herein may be interpreted as "when", or "in a case where", or "in response to determining".

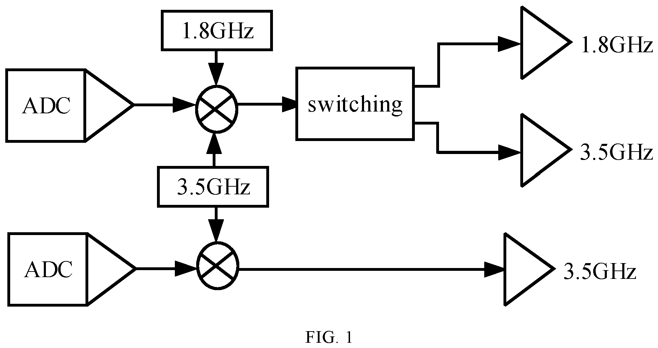

UL Tx refers to radio frequency transmit chain (Tx chain). For a terminal, two Tx chains can be used for uplink transmissions in the same band, or they can be used for uplink transmissions in two bands respectively. A possible hardware implementation of the Tx chain is shown in FIG. 1, in which each analog to digital converter (ADC) may correspond to one Tx chain.

For one or two Tx chains associated with a certain frequency band, actual uplink transmission does not necessarily occur, depending on actual scheduling or configuration. There may be a terminal that sends uplink data through a single port on a band, but a base station cannot determine whether the terminal has performed Tx switching. For example, the terminal supports UL Tx switching among four bands, and a correspondence between Tx chain and band may be as shown in Table 1.

Table 1

| Case | Correspondence between Tx chain and band | | | | Actual transmission (antenna port) |
|------|-------|-------|-------|-------|---------------|
|      | Band#1 | Band#2 | Band#3 | Band#4 | |
| case 1 | 1 | 1 | 0 | 0 | (1,0,0,0) |
| case 2 | 1 | 0 | 1 | 0 | (1,0,0,0) |

In this example, the base station cannot distinguish whether the Tx chain on the terminal side belongs to case 1 or case 2, resulting in inconsistent understanding between the base station side and the terminal side.

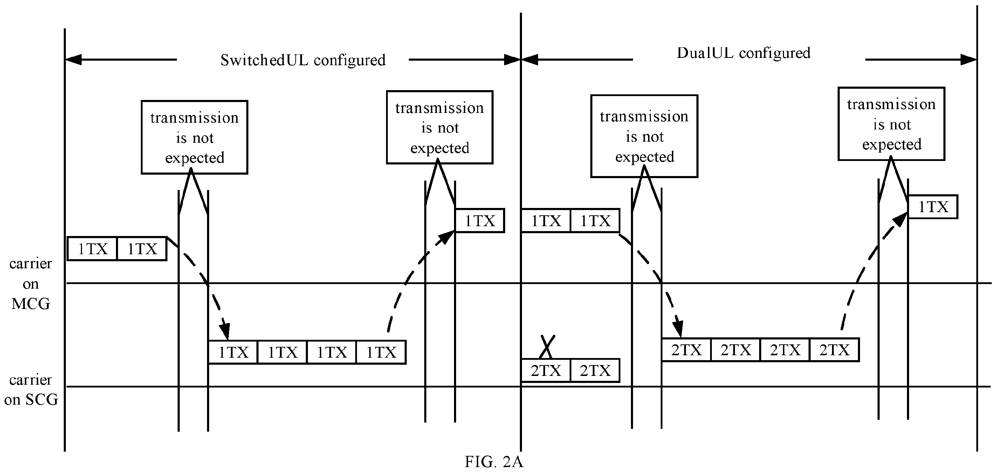

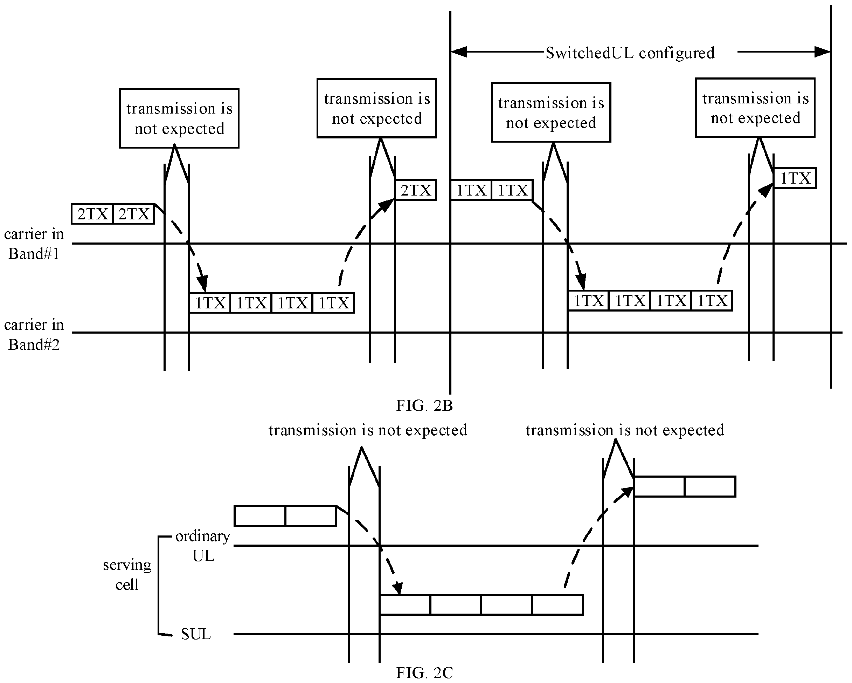

In Release-16 and Release-17, the terminal only supports UL Tx switching between two bands, and supports three scenarios including Evolved Universal Terrestrial Radio Access-New Radio and Dual Connectivity (E-UTRA-NR Dual Connectivity, EN-DC), Inter-band carrier aggregation (CA) and supplementary uplink (SUL) as shown in FIG. 2A to FIG. 2C. 2 Tx transmissions are not supported in the EN-DC scenario.

Furthermore, two different UL Tx switching schemes are supported, namely:

switched uplink (SwitchedUL), where the terminal does not support uplink transmissions simultaneously on two bands; and
dual uplink (DualUL), where the terminal supports uplink transmissions simultaneously on two bands.

The above two transmission modes are configured through Radio Resource Control (RRC) signaling.

The current protocol of schemes only supports UL Tx switching among two bands. In the Rel-18 multicarrier enhancement project, it is determined that UL Tx switching among more than two bands needs to be studied.

An example is given that the terminal supports switching of two UL Tx among 4 bands, there are 10 different association relationships between Tx chains and frequency band pair (the frequency band pair may include one or two of the 4 bands) as shown in Table 2. There are many different actual transmission situations for each association relationship.

Table 2

| Case | Band#1 | Band#2 | Band#3 | Band#4 | Association relationship (P = port) |
|------|--------|--------|--------|--------|-------------------------------------|
| Case 1-1 | 1 | 1 | 0 | 0 | 1p+0p+0p+0p;<br>0p+1p+0p+0p;<br>1p+1p+0p+0p |
| Case 1-2 | 1 | 0 | 1 | 0 | 1p+0p+0p+0p;<br>0p+0p+1p+0p; |

(continued)

| Case | Band#1 | Band#2 | Band#3 | Band#4 | Association relationship (P = port) |
|------|--------|--------|--------|--------|-------------------------------------|
| | | | | | 1p+0p+1p+0p |
| Case 1-3 | 1 | 0 | 0 | 1 | 1p+0p+0p+0p;<br>0p+0p+0p+1p;<br>1p+0p+0p+1p |
| Case 1-4 | 0 | 1 | 1 | 0 | 0p+1p+0p+0p;<br>0p+0p+1p+0p;<br>0p+1p+1p+0p |
| Case 1-5 | 0 | 1 | 0 | 1 | 0p+1p+0p+0p;<br>0p+0p+0p+1p;<br>0p+1p+0p+1p |
| Case 1-6 | 0 | 0 | 1 | 1 | 0p+0p+1p+0p;<br>0p+0p+0p+1p;<br>0p+0p+1p+1p |
| Case 2-1 | 2 | 0 | 0 | 0 | 1p+0p+0p+0p;<br>2p+0p+0p+0p; |
| Case 2-2 | 0 | 2 | 0 | 0 | 0p+1p+0p+0p;<br>0p+2p+0p+0p; |
| Case 2-3 | 0 | 0 | 2 | 0 | 0p+0p+1p+0p;<br>0p+0p+2p+0p; |
| Case 2-4 | 0 | 0 | 0 | 2 | 0p+0p+0p+1p;<br>0p+0p+0p+2p; |

It should be noted that, taking case 1-1 as an example, 1p+0p+0p+0p means that the terminal uses a single port for transmission only in band#1, 0p+1p+0p+0p means that the terminal uses a single port for transmission only in band#2, and 1p+1p+0p+0p means that the terminal uses single ports for transmissions respectively in band#1 and band#2 at the same time.

However, for the specific uplink transmission scenarios mentioned above, the base station and the terminal may have inconsistent understanding of the correspondence between the corresponding Tx chains and the bands. Situations where inconsistent understandings regarding Table 2 are likely to occur are listed below:

Case 1-1(1p+0p+0p+0p) is understood by the base station side as Case 1-2(1p+0p+0p+0p);
Case 1-1(1p+0p+0p+0p) is understood by the base station side as Case 1-3(1p+0p+0p+0p);
Case 1-1(0p+1p+0p+0p) is understood by the base station side as Case 1-4(0p+1p+0p+0p);
Case 1-1(0p+1p+0p+0p) is understood by the base station side as Case 1-5(0p+1p+0p+0p);
Case 1-2(1p+0p+0p+0p) is understood by the base station side as Case 1-3(1p+0p+0p+0p);
Case 1-2(0p+0p+1p+0p) is understood by the base station side as Case 1-4(0p+0p+1p+0p);
Case 1-3(0p+0p+0p+1p) is understood by the base station side as Case 1-5(0p+0p+0p+1p);
Case 1-1(1p+0p+0p+0p) is understood by the base station side as Case 2-1(1p+0p+0p+0p);
Case 1-1(0p+1p+0p+0p) is understood by the base station side as Case 2-2(0p+1p+0p+0p);
Case 1-2(1p+0p+0p+0p) is understood by the base station side as Case 2-1(1p+0p+0p+0p);
Case 1-2(0p+0p+1p+0p) is understood by the base station side as Case 2-3(0p+0p+1p+0p);
Case 1-3(1p+0p+0p+0p) is understood by the base station side as Case 2-1(1p+0p+0p+0p);
Case 1-3(0p+0p+0p+1p) is understood by the base station side as Case 2-4(0p+0p+0p+1p);
Case 1-4(0p+1p+0p+0p) is understood by the base station side as Case 2-2(0p+1p+0p+0p);
Case 1-4(0p+0p+1p+0p) is understood by the base station side as Case 2-3(0p+0p+1p+0p);
Case 1-5(0p+1p+0p+0p) is understood by the base station side as Case 2-2(0p+1p+0p+0p);
Case 1-5(0p+0p+0p+1p) is understood by the base station side as Case 2-2(0p+0p+0p+1p).

It can be seen that when the terminal performs UL Tx switching among more than two bands, the base station cannot determine whether the Tx chain on the terminal side needs to be switched, and cannot determine whether a switching gap is needed between two adjacent uplink transmissions of the terminal, which causes inconsistent understanding between the terminal and the base station.

It should be emphasized that the two adjacent transmissions in this present disclosure may refer to a current transmission actually to be transmitted and a previous transmission immediately adjacent to the current transmission. Different transmissions correspond to different resource scheduling and are not limited to being immediately adjacent in the time domain.

In order to solve the above technical problem, the present disclosure provides the following uplink transmission method. The uplink transmission method provided by the present disclosure will be first introduced below from the side of the terminal.

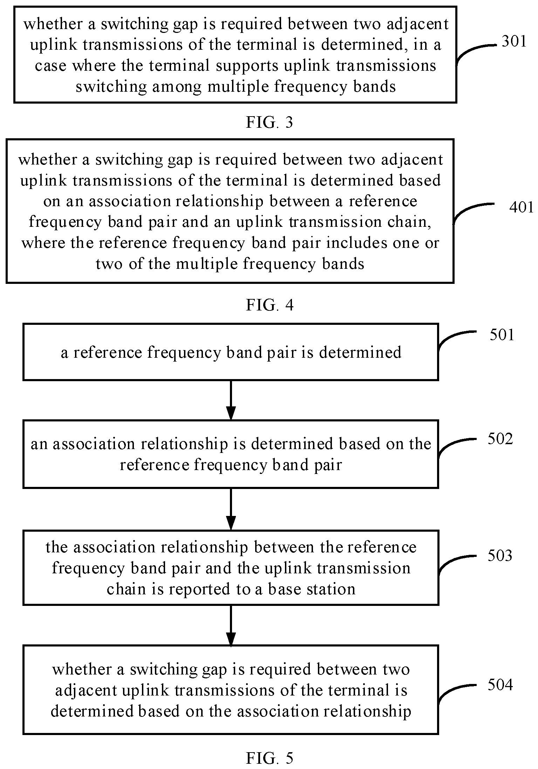

An embodiment of the present disclosure provides an uplink transmission method. Refer to FIG. 3, FIG. 3 is a flow chart of an uplink transmission method according to an embodiment, which may be applied to a terminal. The method may include the following steps.

In step 301, whether a switching gap is required between two adjacent uplink transmissions of the terminal is determined, in a case where the terminal supports uplink transmissions switching among multiple frequency bands, where a total number of the multiple frequency bands is greater than 2.

According to an embodiment of the present disclosure, multiple frequency bands are frequency bands where the terminal supports uplink transmission switching. The total number of multiple frequency bands may be a positive integer greater than 2, such as 3, 4, 5..., which is not limited by the present disclosure. The terminal may determine whether a switching gap is required between two adjacent uplink transmissions of the terminal based on indication transmitted by a base station or based on protocol agreement.

In the above embodiment, when the terminal supports uplink transmission switching among multiple frequency bands, and the total number of multiple frequency bands is greater than 2, the terminal and the base station can determine whether the switching gap is required or not between the two adjacent uplink transmissions of the terminal based on the same rule, which ensures consistent understanding between the terminal and the base station, and improves the flexibility of network deployment and scheduling. In the NR system, the uplink transmission switching is enhanced and the availability is high.

In some optional embodiments, referring to FIG. 4, FIG. 4 is a flow chart of an uplink transmission method according to an embodiment, which may be applied to a terminal. The method may include the following steps.

In step 401, whether a switching gap is required between two adjacent uplink transmissions of the terminal is determined based on an association relationship between a reference frequency band pair and an uplink transmission chain, where the reference frequency band pair includes one or two of the multiple frequency bands.

According to an embodiment of the present disclosure, multiple frequency bands are frequency bands where the terminal supports uplink transmission switching. The total number of multiple frequency bands may be a positive integer greater than 2, such as 3, 4, 5..., which is not limited by the present disclosure.

According to an embodiment of the present disclosure, there may be one or more reference frequency band pairs, which is not limited by the present disclosure. For each reference frequency band pair, it may include one or two of the above-mentioned multiple frequency bands. When multiple frequency bands in which the terminal supports uplink transmission switching is determined, possible combinations for the reference frequency band pair can also be determined accordingly. It is assumed that the total number of multiple frequency bands is N, there are M possible combinations for the reference frequency band pair, where $M = C_N^1 + C_N^2$.

For example, N is 4, and the possible combinations for the reference band pair is M = 10, that is, the possible combinations are the same as the cases shown in Table 2.

One of the multiple frequency bands included in the reference frequency band pair may correspond to any case of case 2-1 to case 2-4 in Table 2, and two of the multiple frequency bands included in the reference frequency band pair may correspond to any case of case 1-1 to case 1-6 in Table 2.

For example, it may be determined that the reference frequency band pair is composed of one or two frequency bands among the first to fourth frequency bands.

In some embodiments of the present disclosure, the terminal may determine whether the switching gap is required based on indication from the base station or based on protocol agreement.

According to an embodiment, in the case where the terminal supports uplink transmission switching among multiple frequency bands, and the total number of multiple frequency bands is greater than 2, whether a switching gap is required or not between two adjacent uplink transmissions of the terminal can be determined based on the association relationship between the reference frequency band pair and the uplink transmission chain, which ensures consistent understanding between the terminal and the base station, and improves the flexibility of network deployment and scheduling. In the NR system, the uplink transmission switching is enhanced and the availability is high.

In some optional embodiments, the above association relationship may be determined by the terminal and then reported to the base station.

Referring to FIG. 5, FIG. 5 is a flow chart of an uplink transmission method according to an embodiment, which may be applied to a terminal. The method may include the following steps.

In step 501, a reference frequency band pair is determined.

According to an embodiment of the present disclosure, the terminal can determine the reference frequency band pair by itself according to its own situation. The reference frequency band pair may include one or two of the above multiple frequency bands, which is not limited in the present disclosure. Multiple frequency bands are frequency bands in which the terminal supports uplink transmission switching. The total number of multiple frequency bands may be a positive integer greater than 2, such as 3, 4, 5..., which is not limited in the present disclosure. The terminal can determine whether a switching gap is required based on instructions of the base station or based on protocol stipulations.

For example, the total number of multiple frequency bands is 4, and the terminal may determine one or more reference frequency band pairs from Table 2, which is not limited in the present disclosure.

In step 502, an association relationship is determined based on the reference frequency band pair.

According to an embodiment of the present disclosure, the terminal may determine the association relationship in the following manners.

In a case where an uplink transmission is performed in a first frequency band included in a first reference frequency band pair, the association relationship is determined based on the first reference frequency band pair, where the first reference frequency band pair is any one frequency band pair of the reference frequency band pair(s).

That is, when an actual uplink transmission of the terminal is performed in the first frequency band in the first reference frequency band pair, the above-mentioned association relationship may be determined by the first reference frequency band pair.

In a possible implementation, the terminal may determine that an uplink transmission chain corresponding to the first reference frequency band pair operates in the first frequency band, and may also determine another uplink transmission chain corresponding to the first reference frequency band pair operates in a second frequency band included in the first reference frequency band pair.

For example, if an actual uplink transmission is performed in band#1 in the reference frequency band pair {band#1, band#2}, then an uplink transmission chain corresponding to the reference frequency band pair {band#1, band#2} operates in band#1, another uplink transmission chain corresponding to the reference frequency band pair {band#1, band#2} operates in band#2.

In step 503, the association relationship between the reference frequency band pair and the uplink transmission chain is reported to a base station.

In step 504, whether a switching gap is required between two adjacent uplink transmissions of the terminal is determined based on the association relationship.

In a possible implementation, in a case where frequency bands where the two adjacent uplink transmissions of the terminal are located belong to the same frequency band pair of the reference frequency band pair(s), it is determined that the switching gap is not required between the two adjacent uplink transmissions of the terminal.

Specifically, in a case where the two adjacent uplink transmissions of the terminal are located in the same frequency band, and the same frequency band belongs to any one frequency band pair of the reference frequency band pair(s), it is determined that the switching gap is not required between the two adjacent uplink transmissions of the terminal.

For example, the two adjacent uplink transmissions of the terminal are in the same frequency band, which is band#1, and band#1 belongs to any one of the previously determined reference frequency band pair(s). It is assumed that it belongs to the reference frequency band pair {band#1, band#2}, then it is determined that the switching gap is not required between the two adjacent uplink transmissions of the terminal.

Specifically, in a case where the two adjacent uplink transmissions of the terminal are located in two different frequency bands, and the two different frequency bands belong to the same frequency band pair of the reference frequency band pair(s), it is determined that the switching gap is not required between the two adjacent uplink transmissions of the terminal.

For example, the two adjacent uplink transmissions of the terminal are located in different frequency bands, which are band#1 and band#2 respectively, and band#1 and band#2 belong to the same reference frequency band pair {band#1, band#2} determined previously. In this case, it is determined that the switching gap is not required between the two adjacent uplink transmissions of the terminal.

In another possible implementation, in a case where the two adjacent uplink transmissions of the terminal are located in two different frequency bands, and the two different frequency bands do not belong to the same frequency band pair of the reference frequency band pair(s), it is determined that the switching gap is required between the two adjacent uplink transmissions of the terminal.

For example, in a case where the two adjacent uplink transmissions of the terminal are in different frequency bands, which are band#1 and band#3 respectively, and the previously determined reference frequency band pair is {band#1, band#2}, then it is determined that the switching gap is required between the two adjacent uplink transmissions of the terminal.

In another possible implementation, the two adjacent uplink transmissions of the terminal are in the same frequency band, the same frequency band belongs to any one frequency band pair of the reference frequency band pair(s), and a correspondence between the same frequency band and the uplink transmission chain changes, then it is determined that the switching gap is required between the two adjacent uplink transmissions of the terminal.

In a case where a number of uplink transmission chains corresponding to the same frequency band changes, the terminal determines that the correspondence changes. Specifically, if the number of uplink transmission chains corresponding to the same frequency band changes from 1 to 2, or from 2 to 1, the terminal considers that the number of uplink transmission chains corresponding to the frequency band has changed, and further determines that the switching gap is required between the two adjacent uplink transmissions of the terminal.

For example, the two adjacent uplink transmissions of the terminal are in the same frequency band, which is band#1, and band#1 belongs to any one of the previously determined reference frequency band pair(s), for example, belongs to the reference frequency band pair {band#1, band#2}, but the number of uplink transmission chains corresponding to band#1 changes from 1 to 2, then the terminal determines that the switching gap is required between the two adjacent uplink transmissions.

In another possible implementation, in a case where there are multiple reference frequency band pairs, and a reference frequency band pair corresponding to the two adjacent uplink transmissions of the terminal changes, it is determined that the switching gap is required between the two adjacent uplink transmissions of the terminal.

For example, the terminal has two reference frequency band pairs, namely {band#1, band#2} and {band#3, band#4}, and a previous uplink transmission of the terminal corresponds to {band#1, band#2}. In a case where a to-be-performed uplink transmission corresponds to {band#3, band#4}, it is determined that the switching gap is required between the two adjacent uplink transmissions.

In the above embodiments, after determining the association relationship, the terminal can report it to the base station, to enable both the terminal side and the base station side to determine whether a switching gap is required or not between two adjacent uplink transmissions of the terminal based on the association relationship, which ensures consistent understanding between the terminal and the base station, and improves the flexibility of network deployment and scheduling. In the NR system, the uplink transmission switching is enhanced and the availability is high.

In some optional embodiments, the base station may transmit indication information to the terminal, where the indication information is used to indicate the reference frequency band pair, and the terminal determines the association relationship according to the reference frequency band pair.

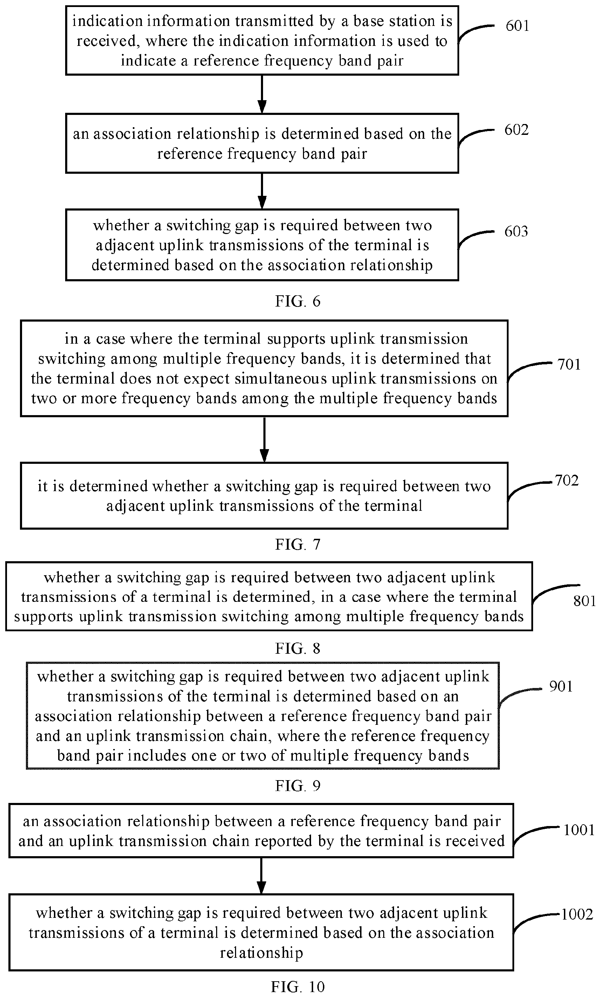

Referring to FIG. 6, FIG. 6 is a flow chart of an uplink transmission method according to an embodiment, which may be applied to a terminal. The method may include the following steps.

In step 601, indication information transmitted by a base station is received, where the indication information is used to indicate a reference frequency band pair.

According to an embodiment of the present disclosure, the base station may transmit indication information to inform the terminal of the reference frequency band pair. Any one of reference frequency band pair(s) may include one or two of the above multiple frequency bands, which is not limited in the present disclosure. Multiple frequency bands are frequency bands where the terminal supports uplink transmission switching. The total number of multiple frequency bands may be a positive integer greater than 2, such as 3, 4, 5..., which is not limited in the present disclosure. The terminal may determine whether a switching gap is required based on instructions from base station or protocol stipulations.

In a possible implementation, the terminal may receive the indication information transmitted by the base station through RRC signaling.

In another possible implementation, the terminal may receive the indication information transmitted by the base station through media access control control element (MAC CE) signaling.

In step 602, an association relationship is determined based on the reference frequency band pair.

In an embodiment of the present disclosure, the terminal may determine the association relationship in the following manners.

In a case where an uplink transmission is performed in a first frequency band included in the first reference frequency band pair, the association relationship is determined based on the first reference frequency band pair, where the first reference frequency band pair is any one frequency band pair of the reference frequency band pair(s).

That is, in the case where actual uplink transmissions of the terminal are performed on the first frequency band in the first reference frequency band pair, the above-mentioned association relationship may be determined by the first reference frequency band pair.

In a possible implementation, the terminal may determine that an uplink transmission chain corresponding to the first reference frequency band pair operates in the first frequency band, and may also determine another uplink transmission chain corresponding to the first reference frequency band pair operates in a second frequency band included in the first reference frequency band pair.

In step 603, whether a switching gap is required between two adjacent uplink transmissions of the terminal is determined based on the association relationship.

In a possible implementation, when frequency bands in which the two adjacent uplink transmissions of the terminal are located belong to the same frequency band pair of the reference frequency band pair(s), it is determined that the switching gap is not required between the two adjacent uplink transmissions of the terminal.

Specifically, when the two adjacent uplink transmissions of the terminal are located in the same frequency band and the same frequency band belongs to any one frequency band pair of the reference frequency band pair(s), it is determined that the switching gap is not required between the two adjacent uplink transmissions of the terminal.

Specifically, when the two adjacent uplink transmissions of the terminal are located in two different frequency bands, and the two different frequency bands belong to the same reference frequency band pair, it is determined that the switching gap is not required between the two adjacent uplink transmissions of the terminal.

In another possible implementation, when the two adjacent uplink transmissions of the terminal are located in two different frequency bands, and the two different frequency bands do not belong to the same reference frequency band pair, it is determined that the switching gap is required between the two adjacent uplink transmissions of the terminal.

In another possible implementation, when the two adjacent uplink transmissions of the terminal are located in the same frequency band, the same frequency band belongs to any one frequency band pair of the reference frequency band pair(s), and a correspondence between the same frequency band and the uplink transmission chain changes, it is determined that the switching gap is required between the two adjacent uplink transmissions of the terminal.

The terminal determines that the correspondence changes when the number of uplink transmission chains corresponding to the same frequency band changes. Specifically, if the number of uplink transmission chains corresponding to the same frequency band changes from 1 to 2, or from 2 to 1, the terminal considers that the number of uplink transmission chains corresponding to the frequency band has changed, and may determine that the switching gap is required between the two adjacent uplink transmissions of the terminal.

In another possible implementation, in a case where there are multiple reference frequency band pairs, when a reference frequency band pair corresponding to two adjacent uplink transmissions of the terminal changes, it is determined that the switching gap is required between the two adjacent uplink transmissions of the terminal.

In the above embodiment, the base station may transmit indication information to the terminal. After determining the reference frequency band pair based on the indication information, the terminal determines the association relationship, and determines whether the switching gap is required between the two adjacent uplink transmissions of the terminal based on the association relationship. The base station side can use the same method to determine whether the switching gap is required. In this way, consistent understanding is ensured between the terminal and the base station, and the flexibility of network deployment and scheduling is improved, achieving enhanced uplink transmission switching in the NR system, with high availability.

In some optional embodiments, the terminal can determine whether a switching gap is required between two adjacent uplink transmissions of the terminal based on the content agreed in the protocol.

Referring to FIG. 7, FIG. 7 is a flow chart of an uplink transmission method according to an embodiment, which may be applied to a terminal. The method may include the following steps.

In step 701, in a case where the terminal supports uplink transmission switching among multiple frequency bands, it is determined that the terminal does not expect simultaneous uplink transmissions on two or more frequency bands among the multiple frequency bands.

According to an embodiment of the present disclosure, multiple frequency bands are frequency bands where the terminal supports uplink transmission switching. The total number of multiple frequency bands may be a positive integer greater than 2, such as 3, 4, 5..., and the present disclosure does not limit thereto.

According to an embodiment of the present disclosure, the terminal may determine based on the protocol agreement that it does not expect to perform uplink transmission simultaneously on two or more frequency bands among the multiple frequency bands.

In step 702, it is determined whether a switching gap is required between two adjacent uplink transmissions of the terminal.

In a possible implementation, in a case where frequency bands of the two adjacent uplink transmissions of the terminal are different, it is determined that the switching gap is required between the two adjacent uplink transmissions of the terminal.

That is, in a case where a frequency band of an uplink transmission to be transmitted by the terminal is different from a frequency band of a previous uplink transmission, the switching gap is required between the two adjacent uplink transmissions.

Of course, the frequency bands in which the two adjacent uplink transmissions occur belong to multiple frequency bands.

For example, the frequency band where the previous uplink transmission was located is band#1, and the to-be-transmitted uplink transmission is in band#2, both of which belong to multiple frequency bands where the terminal supports uplink transmission switching. In this case, it is determined that the switching gap is required between the two adjacent uplink transmissions.

In another possible implementation, in a case where frequency bands for the two adjacent uplink transmissions of the terminal are the same, and numbers of ports used for the two adjacent uplink transmissions are different, it is determined that the switching gap is required between the two adjacent uplink transmissions.

That is, in a case where a frequency band of the uplink transmission to be transmitted by the terminal is the same as a frequency band of the previous uplink transmission, but the numbers of ports used by the two transmissions are different, the switching gap is required between the two adjacent uplink transmissions. Of course, the frequency band in which the two adjacent uplink transmissions occur belong to one of multiple frequency bands.

For example, the frequency band of the previous uplink transmission is band#1, and the number of ports used by it is 1; the uplink transmission to be transmitted is also in band#1, and the number of ports used by it is 2, where band#1 belongs to one of the multiple frequency bands where the terminal that supports uplink transmission switching. In this case, it is determined that the switching gap is required between the two adjacent uplink transmissions.

In another possible implementation, in a case where the frequency bands of the two adjacent uplink transmissions of the terminal are the same, it is determined that the switching gap is not required between the two adjacent uplink transmissions of the terminal.

Specifically, in a case where the frequency bands of two adjacent uplink transmissions of the terminal are the same and the numbers of ports used by both are the same, it is determined that the switching gap is not required between the two adjacent uplink transmissions of the terminal.

Alternatively, in a case where the frequency bands of two adjacent uplink transmissions of the terminal are the same and the numbers of ports used by both are different, it is determined that the switching gap is not required between the two adjacent uplink transmissions of the terminal.

In the above embodiments, the terminal can determine whether the switching gap is required between the two adjacent uplink transmissions of the terminal based on the content agreed in the protocol, and the base station can use the same method to determine whether the switching gap is required or not, which ensures consistent understanding between the terminal and the base station, and improves the flexibility of network deployment and scheduling. In the NR system, the uplink transmission switching is enhanced and the availability is high.

The uplink transmission method provided by the present disclosure will be introduced below from the side of the base station.

An embodiment of the present disclosure provides an uplink transmission method. Refer to FIG. 8, FIG. 8 is a flow chart of an uplink transmission method according to an embodiment. It may be applied to a base station. The method may include the following steps.

In step 801, whether a switching gap is required between two adjacent uplink transmissions of a terminal is determined, in a case where the terminal supports uplink transmission switching among multiple frequency bands, where a total number of the plurality of frequency bands is greater than 2

According to an embodiment of the present disclosure, multiple frequency bands are frequency bands where the terminal supports uplink transmission switching. The total number of multiple frequency bands may be a positive integer greater than 2, such as 3, 4, 5..., which is not limited by the present disclosure. The base station may determine whether a switching gap is required between two adjacent uplink transmissions of the terminal based on indication transmitted to the terminal or based on protocol agreement.

In the above embodiment, in a case where the terminal supports uplink transmission switching among multiple frequency bands, and the total number of multiple frequency bands is greater than 2, the terminal and the base station can determine whether the switching gap is required or not between the two adjacent uplink transmissions of the terminal based on the same rule, which ensures consistent understanding between the terminal and the base station, and improves the flexibility of network deployment and scheduling. In the NR system, the uplink transmission switching is enhanced and the availability is high.

In some optional embodiments, reference is made to FIG. 9, which is a flow chart of an uplink transmission method according to an embodiment, which may be applied to a base station. The method may include the following steps.

In step 901, whether a switching gap is required between two adjacent uplink transmissions of the terminal is determined based on an association relationship between a reference frequency band pair and an uplink transmission chain, where the reference frequency band pair includes one or two of multiple frequency bands.

The specific implementation is similar to the implementation provided by the embodiment shown in FIG. 4 on the side of the terminal, and will not be described again here.

In the above embodiments, in the case where the terminal supports uplink transmission switching among multiple frequency bands, and the total number of multiple frequency bands is greater than 2, whether a switching gap is required or not between two adjacent uplink transmissions of the terminal can be determined based on the association relationship between the reference frequency band pair and the uplink transmission chain, which ensures consistent understanding between the terminal and the base station, and improves the flexibility of network deployment and scheduling. In the NR system, the uplink transmission switching is enhanced and the availability is high.

In some optional embodiments, the above association relationship may be determined by the terminal and then reported to the base station.

Referring to FIG. 10, FIG. 10 is a flow chart of an uplink transmission method according to an embodiment, which may be applied to a base station. The method may include the following steps.

In step 1001, an association relationship between a reference frequency band pair and an uplink transmission chain reported by the terminal is received.

According to an embodiment of the present disclosure, the terminal side may first determine a reference frequency band pair, and then determine the association relationship based on the reference frequency band pair. Further, the terminal directly reports the association relationship to the base station. The specific implementation is similar to the above-mentioned steps 501 to 503, which will not be described again here.

In step 1002, whether a switching gap is required between two adjacent uplink transmissions of a terminal is determined based on the association relationship.

The manner of determining whether the switching gap is required or not is similar to the above step 504, which will not be described again here.

In the above embodiment, after determining the association relationship, the terminal can report it to the base station, to enable both the terminal side and the base station side to determine whether a switching gap is required or not between two adjacent uplink transmissions of the terminal based on the association relationship, which ensures consistent understanding between the terminal and the base station, and improves the flexibility of network deployment and scheduling. In the NR system, the uplink transmission switching is enhanced and the availability is high.

In some optional embodiments, the base station may transmit indication information to the terminal, where the indication information is used to indicate the reference frequency band pair, and the terminal determines the association relationship according to the reference frequency band pair.

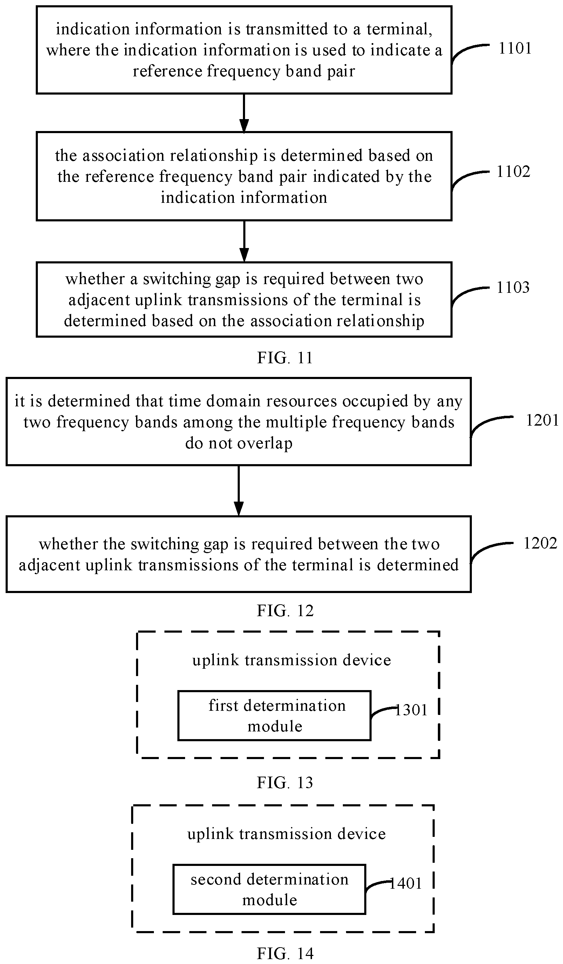

Referring to FIG. 11, FIG. 11 is a flow chart of an uplink transmission method according to an embodiment, which may be applied to a base station. The method may include the following steps.

In step 1101, indication information is transmitted to a terminal, where the indication information is used to indicate a reference frequency band pair.

According to an embodiment of the present disclosure, the base station may transmit indication information to inform the terminal of the reference frequency band pair. Any one of reference frequency band pairs may include one or two of the above multiple frequency bands, which is not limited in the present disclosure. Multiple frequency bands are frequency bands in which the terminal supports uplink transmission switching. The total number of multiple frequency bands may be a positive integer greater than 2, such as 3, 4, 5..., which is not limited in the present disclosure. The terminal can determine whether a switching gap is required based on instructions from the base station or protocol stipulations.

In a possible implementation, the base station may transmit the indication information to the terminal through RRC signaling.

In another possible implementation, the base station may transmit the indication information to the terminal through MAC CE signaling.

In step 1102, the association relationship is determined based on the reference frequency band pair indicated by the indication information.

The manner of the base station side determining the association relationship is similar to the above-mentioned step 602, and will not be described again here.

In step 1103, whether a switching gap is required between two adjacent uplink transmissions of the terminal is determined based on the association relationship.

The way in which the base station side determines whether a switching gap is required between two adjacent uplink transmissions of the terminal is similar to the above step 603, and will not be described again here.

In the above embodiments, the base station may transmit indication information to the terminal. After determining the reference frequency band pair based on the indication information, the terminal determines the association relationship, and determines whether the switching gap is required between the two adjacent uplink transmissions of the terminal based on the association relationship. The base station side can use the same method to determine whether the switching gap is required. In this way, consistent understanding is ensured between the terminal and the base station, and the flexibility of network deployment and scheduling is improved, thereby achieving enhanced uplink transmission switching in the NR system, with high availability.

In some optional embodiments, the base station may determine whether a switching gap is required between two adjacent uplink transmissions of the terminal based on the content agreed in the protocol.

Referring to FIG. 12, FIG. 12 is a flow chart of an uplink transmission method according to an embodiment, which may be applied to a base station. The method may include the following steps.

In step 1201, it is determined that time domain resources occupied by any two frequency bands among the multiple frequency bands do not overlap.

According to an embodiment of the present disclosure, the base station can determine that the time domain resources occupied by any two frequency bands among the multiple frequency bands that are not overlapped based on the agreement of a protocol. When the base station schedules or configures uplink transmissions, the base station needs to ensure the time domain resources occupied by any two frequency bands among the multiple frequency bands not to be overlapped, thereby ensuring that the terminal side will not perform uplink transmissions simultaneously on two or more frequency bands among the multiple frequency bands.

In step 1202, whether the switching gap is required between the two adjacent uplink transmissions of the terminal is determined.

The determination manner is similar to the above step 702, which will not be described again here.

In the above embodiments, consistent understanding between the terminal and the base station can be ensured, and the flexibility of network deployment and scheduling is improved, thereby achieving enhanced uplink transmission switching in the NR system with high availability.

In order to facilitate understanding of the uplink transmission method provided by the present disclosure, the above method will be further illustrated below with examples.

Embodiment 1: it is assumed that a terminal supports two Tx chains in hardware, that is, it can support uplink transmissions in up to two bands simultaneously. If the terminal supports UL Tx switching among N bands, in an embodiment, N=4, the terminal supports, for example, 10 correspondences between Tx chains and bands as shown in Table 3. The last column lists uplink transmission scenarios supported by the terminal under each Tx chain-band correspondence.

Table 3

| Case | Band#1 | Band#2 | Band#3 | Band#4 | Association relationship (P = port) |
|---|---|---|---|---|---|
| Case 1 | 1 | 1 | 0 | 0 | 1p+0p+0p+0p;<br>0p+1p+0p+0p;<br>1p+1p+0p+0p |
| Case 2 | 1 | 0 | 1 | 0 | 1p+0p+0p+0p;<br>0p+0p+1p+0p;<br>1p+0p+1p+0p |
| Case 3 | 1 | 0 | 0 | 1 | 1p+0p+0p+0p;<br>0p+0p+0p+1p;<br>1p+0p+0p+1p |
| Case 4 | 0 | 1 | 1 | 0 | 0p+1p+0p+0p;<br>0p+0p+1p+0p;<br>0p+1p+1p+0p |
| Case 5 | 0 | 1 | 0 | 1 | 0p+1p+0p+0p;<br>0p+0p+0p+1p;<br>0p+1p+0p+1p |
| Case 6 | 0 | 0 | 1 | 1 | 0p+0p+1p+0p;<br>0p+0p+0p+1p;<br>0p+0p+1p+1p |
| Case 7 | 2 | 0 | 0 | 0 | 1p+0p+0p+0p;<br>2p+0p+0p+0p; |
| Case 8 | 0 | 2 | 0 | 0 | 0p+1p+0p+0p;<br>0p+2p+0p+0p; |
| Case 9 | 0 | 0 | 2 | 0 | 0p+0p+1p+0p;<br>0p+0p+2p+0p; |
| Case 10 | 0 | 0 | 0 | 2 | 0p+0p+0p+1p;<br>0p+0p+0p+2p; |

The correspondence between the Tx chain and the band is illustrated by taking case 1 and case 7 as examples, as well as a transmission manner supported by each case.

Case 1, one Tx chain of the terminal operates in band#1, and the other Tx chain operates in band#2. In specific transmission scenarios, 1p+0p+0p+0p means that the terminal uses a single port for uplink transmission only in band#1;

0p+1p+0p+0p means that the terminal uses a single port for uplink transmission only in band#2; 1p+1p+0p+0p means that the terminal uses single ports for uplink transmission respectively in band#1 and band#2 at the same time.

Case 7, both Tx chains of the terminal operate in band#1. In specific transmission scenarios, 1p+0p+0p+0p means that the terminal uses a single port for uplink transmission only in band#1; 2p+0p+0p+0p means that the terminal uses dual ports for uplink transmission only in band#1.

Based on the table summarized above, the same transmission scenario exists under different Tx chain operating states (case 1 to case 10), which causes the base station side to be unable to determine whether the terminal side needs to perform UL Tx switching, thus affecting scheduling decisions. Specifically, the network side cannot determine the correspondence between the Tx chain and the band in the following transmission scenarios:

Case 1(1p+0p+0p+0p) → Case 2(1p+0p+0p+0p);
Case 1(1p+0p+0p+0p) → Case 3(1p+0p+0p+0p);
Case 1(0p+1p+0p+0p) → Case 4(0p+1p+0p+0p);
Case 1(0p+1p+0p+0p) → Case 5(0p+1p+0p+0p);
Case 2(1p+0p+0p+0p) → Case 3(1p+0p+0p+0p);
Case 2(0p+0p+1p+0p) → Case 4(0p+0p+1p+0p);
Case 3(0p+0p+0p+1p) → Case 5(0p+0p+0p+1p);
Case 1(1p+0p+0p+0p) → Case 7(1p+0p+0p+0p);
Case 1(0p+1p+0p+0p) → Case 8(0p+1p+0p+0p);
Case 2(1p+0p+0p+0p) → Case 7(1p+0p+0p+0p);
Case 2(0p+0p+1p+0p) → Case 9(0p+0p+1p+0p);
Case 3(1p+0p+0p+0p) → Case 7(1p+0p+0p+0p);
Case 3(0p+0p+0p+1p) → Case 10(0p+0p+0p+1p);
Case 4(0p+1p+0p+0p) → Case 8(0p+1p+0p+0p);
Case 4(0p+0p+1p+0p) → Case 9(0p+0p+1p+0p);
Case 5(0p+1p+0p+0p) → Case 7(0p+1p+0p+0p);
Case 5(0p+0p+0p+1p) → Case 10(0p+0p+0p+1p).

For each of different Tx chain operating states, the terminal requires a certain switching gap to complete the hardware switching.

According to an embodiment , in order to achieve consistent understanding of UL Tx switching between the terminal side and the network side, the terminal may report the association relationship between N reference frequency band pairs and related uplink Tx chains.

In an embodiment, it is assumed that N=1, the reference band pair includes two bands, and the two bands included in the band pair belong to M bands where UL Tx switching is supported. According to an embodiment, it is assumed that M=4, and a band combination in which the terminal supports UL Tx switching is {band#1, band#2, band#3, band#4}. Specifically, the band combination where UL Tx switching is supported may be reported by the terminal or determined in other manners, and the present disclosure is not limited thereto.

It is assumed that the association relationship between the reference band pair and the Tx chain reported by the terminal is case 1, which is as shown in Table 4 below.

Table 4

| Case | Band#1 | Band#2 | Band#3 | Band#4 | Association relationship (P=port) |
|------|--------|--------|--------|--------|-----------------------------------|
| Case 1 | 1 | 1 | 0 | 0 | 1p+0p+0p+0p;<br>0p+1p+0p+0p;<br>1p+1p+0p+0p |

In a case where a band in which an actual UL transmission is located is included in the reference band pair, the switching gap is not required.

Specifically, in a case where the two adjacent uplink transmissions of the terminal are located in the same frequency band, and the band belongs to any one of the reference band pairs, a switching gap is not required between two adjacent uplink transmissions. Alternatively, in a case where the two adjacent uplink transmissions of the terminal are located in two different frequency bands and the two different frequency bands belong to the same frequency band pair of the reference frequency band pair(s), a switching gap is not required between two adjacent uplink transmissions.

In a case where the two adjacent uplink transmissions of the terminal are located in two different frequency bands, and the two different frequency bands do not belong to the same frequency band pair of the reference frequency band pair;

or, the two adjacent uplink transmissions of the terminal are located in the same frequency band, the same frequency band belongs to any one frequency band pair of the reference frequency band pairs, and a correspondence between the same frequency band and the uplink transmission chain changes (for example, changing from 1 Tx chain to 2 Tx chains, or vice versa), then a switching gap is required between two adjacent uplink transmissions of the terminal.

Based on this method, when the base station schedules the terminal to perform uplink transmission in the following scenarios, there is no need to consider the switching gap between adjacent uplink transmissions in the time domain.

Based on the method of the embodiments, the reference band pair reported by the terminal is {band#1, band#2}, and a correspondence between a corresponding Tx chain and a band is that one Tx chain operates in band#1, and the other Tx chain operates in band#2. If the terminal scheduled by the base station meets the transmission case of the reference band pair, that is, (1p+0p+0p+0p), or (0p+1p+0p+0p), or (1p+1p+0p+0p), then the terminal does not need to perform UL Tx switching in the three scheduling scenarios.

Embodiment 2: as described in Embodiment 1, it is assumed that the terminal reports two reference band pairs, namely {band#1, band#2} and {band#3, band#4}. Tx chains corresponding to the two reference band pairs reported by the terminal and uplink transmissions scenarios that can be supported simultaneously are shown in Table 5 below.

Table 5

| Case | Band#1 | Band#2 | Band#3 | Band#4 | Association relationship (P=port) |
|---|---|---|---|---|---|
| Case 1 | 1 | 1 | 0 | 0 | 1p+0p+0p+0p;<br>0p+1p+0p+0p;<br>1p+1p+0p+0p |
| Case 6 | 0 | 0 | 1 | 1 | 0p+0p+1p+0p;<br>0p+0p+0p+1p;<br>0p+0p+1p+1p |

In a case where an uplink transmission scheduled by the base station meets a transmission case corresponding to any one of the above reference band pairs, it is considered that the correspondence between the Tx chain and the band is determined by the reference band pair, and no switching is required.

Of course, when case 1 is switched to case 6, a certain switching gap is required between two adjacent uplink transmissions. Other technical details are similar to these in Embodiment 1 and will not be described again.

Embodiment 3: it is assumed that the terminal supports two Tx chains in hardware, that is, it can support uplink transmissions in up to two bands at the same time. If the terminal supports UL Tx switching among N bands, in an embodiment, N=4, the terminal supports, for example, 10 correspondences between Tx chains and bands as shown in Table 3. The last column represents uplink transmission scenarios supported by the terminal under each Tx chain-band correspondence.

The correspondence between the Tx chain and the band is illustrated by taking case 1 and case 7 as examples, as well as a transmission manner supported by each case.

Case 1, one Tx chain of the terminal operates in band#1, and the other Tx chain operates in band#2. In specific transmission scenarios, 1p+0p+0p+0p means that the terminal uses a single port for uplink transmission only in band#1; 0p+1p+0p+0p means that the terminal uses a single port for uplink transmission only in band#2; 1p+1p+0p+0p means that the terminal uses single ports for uplink transmission respectively in band#1 and band#2 at the same time.

Case 7, both Tx chains of the terminal operate in band#1. In specific transmission scenarios, 1p+0p+0p+0p means that the terminal uses a single port for uplink transmission only in band#1; 2p+0p+0p+0p means that the terminal uses dual ports for uplink transmission only in band#1.

Based on the table summarized above, the same transmission scenario exists under different Tx chain operating states (case 1 to case 10), which causes the base station side to be unable to determine whether the terminal side needs to perform UL Tx switching, thus affecting scheduling decisions. Specifically, the network side cannot determine the correspondence between the Tx chain and the band in the following transmission scenarios:

Case 1(1p+0p+0p+0p) → Case 2(1p+0p+0p+0p);
Case 1(1p+0p+0p+0p) → Case 3(1p+0p+0p+0p);
Case 1(0p+1p+0p+0p) → Case 4(0p+1p+0p+0p);
Case 1(0p+1p+0p+0p) → Case 5(0p+1p+0p+0p);
Case 2(1p+0p+0p+0p) → Case 3(1p+0p+0p+0p);
Case 2(0p+0p+1p+0p) → Case 4(0p+0p+1p+0p);
Case 3(0p+0p+0p+1p) → Case 5(0p+0p+0p+1p);

Case 1(1p+0p+0p+0p) → Case 7(1p+0p+0p+0p);
Case 1(0p+1p+0p+0p) → Case 8(0p+1p+0p+0p);
Case 2(1p+0p+0p+0p) → Case 7(1p+0p+0p+0p);
Case 2(0p+0p+1p+0p) → Case 9(0p+0p+1p+0p);
Case 3(1p+0p+0p+0p) → Case 7(1p+0p+0p+0p);
Case 3(0p+0p+0p+1p) → Case 10(0p+0p+0p+1p);
Case 4(0p+1p+0p+0p) → Case 8(0p+1p+0p+0p);
Case 4(0p+0p+1p+0p) → Case 9(0p+0p+1p+0p);
Case 5(0p+1p+0p+0p) → Case 7(0p+1p+0p+0p);
Case 5(0p+0p+0p+1p) → Case 10(0p+0p+0p+1p).

For each of different Tx chain operating states, the terminal needs a certain switching gap to complete the hardware switching.

According to an embodiment, in order to avoid the problem of inconsistent understanding between the base station and the terminal on the operating frequency band of the Tx chain, the base station instructs the terminal one or more reference band pairs through explicit signaling. Each of the reference band pair includes two bands, and the two bands included in the band pair belong to M bands where UL Tx switching is supported. According to an embodiment, it is assumed M=4, and a band combination in which the terminal supports UL Tx switching is {band#1, band#2, band#3, band#4}. Specifically, the band combination where UL Tx switching is supported may be reported by the terminal or determined in other manners, and the present disclosure is not limited thereto.

It is assumed that the association relationship between the reference band pair and the Tx chain reported by the terminal is case 1, that is, as shown in Table 4.

In a case where an actual UL transmission is performed in a band included in the reference band pair, the switching gap is not required.

Specifically, in a case where two adjacent uplink transmissions are located in the same frequency band, and the same frequency band belongs to any one frequency band pair of the reference frequency band pairs, then there is no need for a switching gap between the two adjacent uplink transmissions; or, in a case where two adjacent uplink transmissions are located in two different frequency bands, and the two different frequency bands belong to the same frequency band pair of the reference frequency band pairs, there is no need for a switching gap between the two adjacent uplink transmissions.

In a case where two adjacent uplink transmissions are located are in two different frequency bands, and the two different frequency bands do not belong to the same frequency band pair of the reference frequency band pairs; or two adjacent uplink transmissions of the terminal are located are in the same frequency band, the same frequency band belongs to any one frequency band pair of the reference frequency band pairs, and a correspondence between the same frequency band and the uplink transmission chain changes (for example, changing from 1 Tx chain to 2 Tx chains, or vice versa), then a switching gap is required between two adjacent uplink transmissions.

Based on the method, in a case where the base station schedules the terminal to perform uplink transmission in the following scenarios, there is no need to consider a switching gap between adjacent uplink transmissions in the time domain. Based on the method of the embodiments, the reference band pair reported by the terminal is {band#1, band#2}, and a correspondence between a corresponding Tx chain and a band is that one Tx chain operates in band#1, and the other Tx chain operates in band#2. If the base station schedules the terminal to meet the transmission case of the reference band pair, that is, (1p+0p+0p+0p) or (0p+1p+0p+0p) or (1p+1p+0p+0p), then the terminal does not need to perform UL Tx switching in the three scheduling scenarios.

Further, the explicit signaling transmitted by the base station is RRC signaling or MAC CE signaling, which is not limited by the present disclosure.

Embodiment 4: it is assumed that the terminal supports two Tx chains in hardware, that is, it can support uplink transmissions in up to two bands at the same time. If the terminal supports UL Tx switching among N bands, in an embodiment, N=4, the terminal supports, for example, 10 correspondences between Tx chains and bands as shown in Table 3. The last column represents uplink transmission scenarios supported by the terminal under each Tx chain-band correspondence.

The correspondence between the Tx chain and the band is illustrated by taking case 1 and case 7 as examples, as well as a transmission manner supported by each case.

Case 1, one Tx chain of the terminal operates in band#1, and the other Tx chain operates in band#2. In specific transmission scenarios, 1p+0p+0p+0p means that the terminal uses a single port for uplink transmission only in band#1; 0p+1p+0p+1p means that the terminal uses a single port for uplink transmission only in band#2; 1p+1p+0p+0p means that the terminal uses single ports for uplink transmission respectively in band#1 and band#2 at the same time.

Case 7, both Tx chains of the terminal operate in band#1. In specific transmission scenarios, 1p+0p+0p+0p means that the terminal uses a single port for uplink transmission only in band#1; 2p+0p+0p+0p means that the terminal uses dual ports for uplink transmission only in band#1.

Based on the table summarized above, the same transmission scenario exists under different Tx chain operating states (case 1 to case 10), which causes the base station side to be unable to determine whether the terminal side needs to perform UL Tx switching, thus affecting scheduling decisions. Specifically, the network side cannot determine the correspondence between the Tx chain and the band in the following transmission scenarios:

Case 1(1p+0p+0p+0p) → Case 2(1p+0p+0p+0p);
Case 1(1p+0p+0p+0p) → Case 3(1p+0p+0p+0p);
Case 1(0p+1p+0p+0p) → Case 4(0p+1p+0p+0p);
Case 1(0p+1p+0p+0p) → Case 5(0p+1p+0p+0p);
Case 2(1p+0p+0p+0p) → Case 3(1p+0p+0p+0p);
Case 2(0p+0p+1p+0p) → Case 4(0p+0p+1p+0p);
Case 3(0p+0p+0p+1p) → Case 5(0p+0p+0p+1p);
Case 1(1p+0p+0p+0p) → Case 7(1p+0p+0p+0p);
Case 1(0p+1p+0p+0p) → Case 8(0p+1p+0p+0p);
Case 2(1p+0p+0p+0p) → Case 7(1p+0p+0p+0p);
Case 2(0p+0p+1p+0p) → Case 9(0p+0p+1p+0p);
Case 3(1p+0p+0p+0p) → Case 7(1p+0p+0p+0p);
Case 3(0p+0p+0p+1p) → Case 10(0p+0p+0p+1p);
Case 4(0p+1p+0p+0p) → Case 8(0p+1p+0p+0p);
Case 4(0p+0p+1p+0p) → Case 9(0p+0p+1p+0p);
Case 5(0p+1p+0p+0p) → Case 7(0p+1p+0p+0p);
Case 5(0p+0p+0p+1p) → Case 10(0p+0p+0p+1p).

For each of different Tx chain operating states, the terminal requires a certain switching gap to complete the hardware switching.

In order to avoid inconsistent understanding on the Tx chain state of the terminal between the base station and the terminal, a predefined manner by a protocol is adopted in the present disclosure, to ensure consistent understanding between the base station and the terminal, and the following rules are predefined.

The terminal does not expect simultaneous uplink transmission on two bands.

That is, the terminal can perform uplink transmission in only one band of M bands where UL Tx switching is supported.

In a case where frequency bands of two adjacent uplink transmissions of the terminal are different, a UL Tx switching gap is required between the two adjacent uplink transmissions. The frequency bands of the two adjacent uplink transmissions belong to M bands where UL Tx switching is supported.

In a case where frequency bands of two adjacent uplink transmissions of the terminal are the same, a UL Tx switching gap is not required between the two adjacent uplink transmissions, where M is an integer greater than 2.

According to the method, regardless of the actual Tx chain state of the terminal, or the number of ports when the terminal performs uplink transmission on a certain band, as long as a band where the terminal is going to perform an uplink transmission is different from a band where an previous adjacent uplink transmission is located, it needs to assumed that a switching gap is required between the two uplink transmissions. In addition, as long as the band where the terminal is going to perform an uplink transmission is the same as the band where the previous adjacent uplink transmission is located, it is considered that a switching gap is not required between the two uplink transmissions.

Embodiment 5 is same as described in Embodiment 4, additionally, the following predefined rule may be taken into consideration.

The band where the terminal is going to perform an uplink transmission is the same as the band where the previous adjacent uplink transmission is located, but the numbers of ports used for the two transmissions are different. In this case, it needs to be assumed that a switching gap is required between the two uplink transmissions.

In the above embodiment, in a case where the terminal supports uplink transmission switching among multiple frequency bands, and the total number of multiple frequency bands is greater than 2, the terminal and the base station can determine whether the switching gap is required or not between the two adjacent uplink transmissions of the terminal based on the same rule, which ensures consistent understanding between the terminal and the base station, and improves the flexibility of network deployment and scheduling. In the NR system, the uplink transmission switching is enhanced and the availability is high.

Corresponding to the foregoing application functions implementing the method embodiments, the present disclosure further provides device embodiments for implementing the application functions.

Referring to FIG. 13, FIG. 13 is a block diagram of an uplink transmission device according to an exemplary embodiment. The device is applied to a terminal and includes:

a first determination module 1301, configured to determine whether a switching gap is required between two adjacent uplink transmissions of the terminal, in a case where the terminal supports uplink transmission switching among a plurality of frequency bands, where a total number of the plurality of frequency bands is greater than 2.

Referring to FIG. 14, FIG. 14 is a block diagram of an uplink transmission device according to an exemplary embodiment. The apparatus is applied to a base station and includes:

a second determination module 1401, configured to determine whether a switching gap is required between two adjacent uplink transmissions of a terminal, in a case where the terminal supports uplink transmission switching among a plurality of frequency bands, where a total number of the plurality of frequency bands is greater than 2.

The device embodiments basically correspond to the method embodiments, the related contents can refer to part of the descriptions of the method embodiments. The above-described device embodiments are merely schematic, the units described above as separate components may or may not be physically separated, and the components displayed as units may or may not be physical units, i.e., the components may be located in one area or may be distributed to multiple network units. Some or all of these modules can be selected according to practical needs to achieve the purpose of the solution of the present disclosure. Those skilled in the art can understand and implement the solution without creative efforts.

Correspondingly, the present disclosure further provides a computer-readable storage medium. The computer-readable storage medium stores a computer program, and the computer program is used to execute any of the above-mentioned uplink transmission method on the side of the terminal.

Correspondingly, the present disclosure further provides a computer-readable storage medium. The computer-readable storage medium stores a computer program, and the computer program is used to execute any of the above-mentioned uplink transmission method on the side of the base station.

Correspondingly, the present disclosure further provides an uplink transmission device, including:

> a processor; and
> a memory configured to store instructions executable by the processor,
> where the processor is configured to execute any of the above-mentioned uplink transmission method on the side of the terminal.

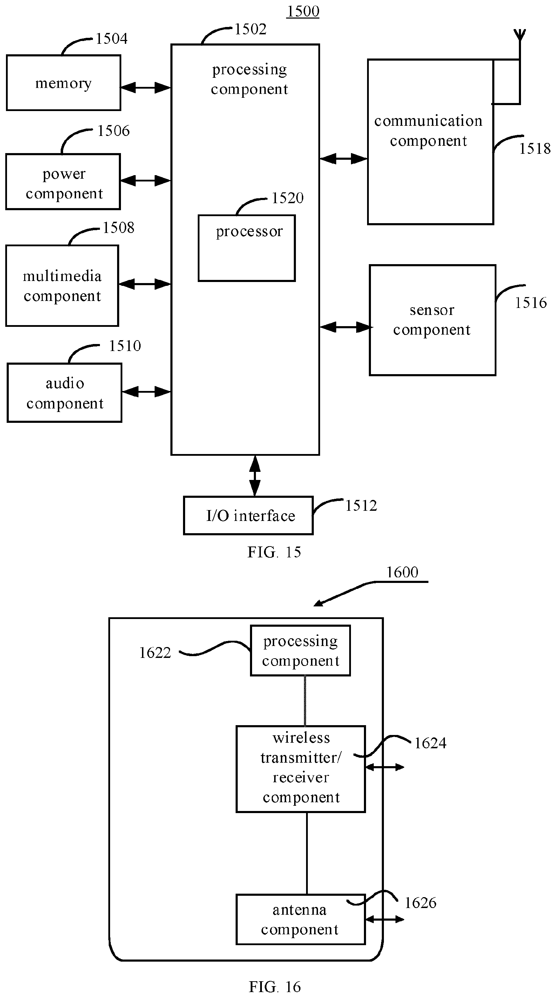

FIG. 15 is a block diagram of an uplink transmission device 1500 according to an exemplary embodiment. For example, the device 1500 may be a mobile phone, a tablet computer, an e-book reader, a multimedia playback device, a wearable device, a vehicle-mounted user equipment, an iPad, a smart TV and other terminals.

Referring to FIG. 15, the device 1500 may include one or more of the following components: a processing component 1502, a memory 1504, a power supply component 1506, a multimedia component 1508, an audio component 1510, an input/output (I/O) interface 1512, a sensor component 1516, and a communication component 1518.

The processing component 1502 typically controls overall operations of the device 1500 such as the operations associated with display, telephone calls, data communications, camera operations, and recording operations. The processing component 1502 may include one or more processors 1520 to perform all or part of the steps in the above described method. Moreover, the processing component 1502 may include one or more modules which facilitate the interaction between the processing component 1502 and other components. For example, the processing component 1502 may include a multimedia module to facilitate the interaction between the multimedia component 1508 and the processing component 1502. For another example, the processing component 1502 may read executable instructions from the memory to implement steps of the uplink transmission method provided by the above embodiments.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power supply component 1506 provides power to various components of the device 1500. The power supply component 1506 may include a power management system, one or more power sources, and any other components associated with the generation, management, and distribution of power in the device 1500.

The multimedia component 1508 includes a display screen providing an output interface between the device 1500 and the user. In some embodiments, the multimedia component 1508 includes a front-facing camera and/or a rear-facing camera. When the device 1500 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the device 1500 is in an operation mode, such as a call mode, a recording mode, and a voice recognition mode. The received audio signal may be further stored in the memory 1504 or transmitted via the communication component 1518. In some embodiments, the audio component 1510 further includes a speaker to output audio signals.

The I/O interface 1512 provides an interface between the processing component 1502 and peripheral interface modules. The peripheral interface module may be a keyboard, a click wheel, buttons, and the like. The buttons may include, but are not limited to, a home button, a volume button, a starting button, and a locking button.

The sensor component 1516 includes one or more sensors to provide status assessments of various aspects of the device. For instance, the sensor component 1516 may detect an on/off status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1516 may include a proximity sensor configured to detect the presence of nearby objects without any physical contact. The sensor component 1516 may also include a light sensor, such as a Complementary Metal Oxide Semiconductor (CMOS) or Charge-Coupled Device (CCD) image sensor, for use in imaging applications. In some embodiments, the sensor component 1516 may also include an accelerometer sensor, a gyroscope sensor, a magnetic sensor, a pressure sensor, or a temperature sensor.

The communication component 1518 is configured to facilitate communication, wired or wirelessly, between the device 1500 and other devices. The device 1500 can access a wireless network based on a communication standard, such as Wi-Fi, 2G, 3G, 4G, 5G 6G, or a combination thereof. In an exemplary embodiment, the communication component 1518 receives a broadcast signal or broadcast associated information from an external broadcast management system via a broadcast channel. In an exemplary embodiment, the communication component 1518 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 1500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing any of the above uplink transmission method on the side of the terminal.

In an exemplary embodiment, there is also provided a non-transitory computer readable storage medium including executable instructions, such as the memory 1504, executable by the processor 1520 in the device 1500, for performing the above method. For example, the non-transitory computer-readable storage medium may be a ROM, a Random Access Memory (RAM), a CD-ROM, a magnetic tape, a floppy disc, and an optical data storage device.

Correspondingly, the present disclosure further provides an uplink transmission device, including:

a processor; and
a memory configured to store instructions executable by the processor,
where the processor is configured to execute any of the above-mentioned uplink transmission method on the side of the base station.

As shown in FIG. 16, FIG. 16 is a schematic structural diagram of an uplink transmission device 1600 according to an exemplary embodiment. The device 1600 may be provided as a base station. Referring to FIG. 16, the device 1600 includes a processing component 1622, a wireless transmitter/receiver component 1624, an antenna component 1626, and a wireless interface-specific signal processing portion. The processing component 1622 may further include at least one processor.

One of the processors in the processing component 1622 may be configured to perform any of the above-described uplink transmission method.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and to include common knowledge or conventional technical means in the technical field that are not disclosed in the present disclosure. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure is only subjected to the appended claims.

**Claims**

**1.** An uplink transmission method, performed by a terminal, comprising:
determining whether a switching gap is required between two adjacent uplink transmissions of the terminal in a case where the terminal supports uplink transmission switching among a plurality of frequency bands, wherein a total number of the plurality of frequency bands is greater than 2.

**2.** The uplink transmission method according to claim 1, wherein the determining whether the switching gap is required between the two adjacent uplink transmissions of the terminal comprises:
determining whether the switching gap is required between the two adjacent uplink transmissions of the terminal based on an association relationship between a reference frequency band pair and an uplink transmission chain, wherein the reference frequency band pair comprises one or two of the plurality of frequency bands.

**3.** The uplink transmission method according to claim 2, further comprising:

determining the reference frequency band pair;
determining the association relationship based on the reference frequency band pair; and
reporting the association relationship to a base station.

**4.** The uplink transmission method according to claim 2, further comprising:

receiving indication information transmitted by a base station, wherein the indication information is used to indicate the reference frequency band pair; and
determining the association relationship based on the reference frequency band pair indicated by the indication information.

**5.** The uplink transmission method according to claim 4, wherein the receiving the indication information transmitted by the base station comprises:

receiving the indication information transmitted by the base station through a radio resource control (RRC) signaling; or
receiving the indication information transmitted by the base station through a media access control control element (MAC CE) signaling.

**6.** The uplink transmission method according to any one of claims 3 to 5, wherein the determining the association relationship comprises:
determining the association relationship based on a first reference frequency band pair in a case where an uplink transmission is performed in a first frequency band comprised in the first reference frequency band pair, wherein the first reference frequency band pair is any one frequency band pair of the reference frequency band pair.

**7.** The uplink transmission method according to claim 6, wherein the determining the association relationship based on the first reference frequency band pair comprises:

determining that an uplink transmission chain corresponding to the first reference frequency band pair operates in the first frequency band; and
determining that another uplink transmission chain corresponding to the first reference frequency band pair operates in a second frequency band comprised in the first reference frequency band pair.

**8.** The uplink transmission method according to claim 7, wherein the determining whether the switching gap is required between the two adjacent uplink transmissions of the terminal based on the association relationship between the reference frequency band pair and the uplink transmission chain comprises:
determining that the switching gap is not required between the two adjacent uplink transmissions of the terminal in a case where frequency bands in which the two adjacent uplink transmissions of the terminal are located belong to a same frequency band pair of the reference frequency band pair.

**9.** The uplink transmission method according to claim 8, wherein the determining that the switching gap is not required between the two adjacent uplink transmissions of the terminal in a case where the frequency bands in which the two adjacent uplink transmissions of the terminal are located belong to the same frequency band pair of the reference frequency band pair comprises:

determining that the switching gap is not required between the two adjacent uplink transmissions of the terminal in a case where the two adjacent uplink transmissions of the terminal are located in a same frequency band, and the same frequency band belongs to any one frequency band pair of the reference frequency band pair; or determining that the switching gap is not required between the two adjacent uplink transmissions of the terminal in a case where the two adjacent uplink transmissions of the terminal are located in two different frequency bands, and the two different frequency bands belong to a same frequency band pair of the reference frequency band pair.

**10.** The uplink transmission method according to claim 2, wherein the determining whether the switching gap is required between the two adjacent uplink transmissions of the terminal based on the association relationship between the reference frequency band pair and the uplink transmission chain comprises:

determining that the switching gap is required between the two adjacent uplink transmissions of the terminal in a case where the two adjacent uplink transmissions of the terminal are located in two different frequency bands, and the two different frequency bands do not belong to a same frequency band pair of the reference frequency band pair; or determining that the switching gap is required between the two adjacent uplink transmissions of the terminal in a case where the two adjacent uplink transmissions of the terminal are located in a same frequency band, the same frequency band belongs to any one frequency band pair of the reference frequency band pair, and a correspondence between the same frequency band and the uplink transmission chain changes.

**11.** The uplink transmission method according to claim 10, further comprising:
determining that the correspondence changes in a case where a number of uplink transmission chains corresponding to the same frequency band changes. 12. (Original) The uplink transmission method according to claim 2, wherein the determining whether the switching gap is required between the two adjacent uplink transmissions of the terminal based on the association relationship between the reference frequency band pair and the uplink transmission chain comprises:
determining that the switching gap is required between the two adjacent uplink transmissions of the terminal in a case where there are a plurality of reference frequency band pairs, and a reference frequency band pair corresponding to the two adjacent uplink transmissions of the terminal changes.

**13.** The uplink transmission method according to claim 1, further comprising:
determining that the terminal does not expect simultaneous uplink transmissions on two or more frequency bands among the plurality of frequency bands.

**14.** The uplink transmission method according to claim 13, wherein the determining whether the switching gap is required between the two adjacent uplink transmissions of the terminal comprises:

determining that the switching gap is required between the two adjacent uplink transmissions of the terminal in a case where frequency bands for the two adjacent uplink transmissions of the terminal are different; or determining that the switching gap is required between the two adjacent uplink transmissions of the terminal in a case where frequency bands for the two adjacent uplink transmissions of the terminal are the same, and numbers of ports used for the two adjacent uplink transmissions are different.

**15.** The uplink transmission method according to claim 13, wherein the determining whether the switching gap is required between the two adjacent uplink transmissions of the terminal comprises:
determining that the switching gap is not required between the two adjacent uplink transmissions of the terminal in a case where frequency bands for the two adjacent uplink transmissions of the terminal are the same.

**16.** The uplink transmission method according to claim 15, wherein numbers of ports used for the two adjacent uplink transmissions of the terminal are the same or different.

**17.** An uplink transmission method, performed by a base station, comprising:
determining whether a switching gap is required between two adjacent uplink transmissions of a terminal in a case where the terminal supports uplink transmission switching among a plurality of frequency bands, wherein a total number of the plurality of frequency bands is greater than 2.

**18.** The uplink transmission method according to claim 17, wherein the determining whether the switching gap is required between the two adjacent uplink transmissions of the terminal comprises:
determining whether the switching gap is required between the two adjacent uplink transmissions of the terminal based on an association relationship between a reference frequency band pair and an uplink transmission chain, wherein the reference frequency band pair comprises one or two of the plurality of frequency bands.

**19.** The uplink transmission method according to claim 18, further comprising:
receiving the association relationship reported by the terminal.

**20.** The uplink transmission method according to claim 18, further comprising:

transmitting indication information to the terminal, wherein the indication information is used to indicate the reference frequency band pair; and
determining the association relationship based on the reference frequency band pair indicated by the indication information.

**21.** The uplink transmission method according to claim 20, wherein the transmitting the indication information to the terminal comprises:

transmitting the indication information to the terminal through a radio resource control (RRC) signaling; or
transmitting the indication information to the terminal through a media access control control element (MAC CE) signaling.

**22.** The uplink transmission method according to any one of claims 19 to 21, wherein the determining the association relationship comprises:
determining the association relationship based on a first reference frequency band pair in a case where an uplink transmission is performed by the terminal through a first frequency band comprised in the first reference frequency band pair, wherein the first reference frequency band pair is any one frequency band pair of the reference frequency band pair.

**23.** The uplink transmission method according to claim 22, wherein the determining the association relationship based on the first reference frequency band pair comprises:

determining that an uplink transmission chain corresponding to the first reference frequency band pair operates in the first frequency band; and
determining that another uplink transmission chain corresponding to the first reference frequency band pair operates in a second frequency band comprised in the first reference frequency band pair.

**24.** The uplink transmission method according to claim 18, wherein the determining whether the switching gap is required between the two adjacent uplink transmissions of the terminal based on the association relationship between the reference frequency band pair and the uplink transmission chain comprises:
determining that the switching gap is not required between the two adjacent uplink transmissions of the terminal in a case where frequency bands in which the two adjacent uplink transmissions of the terminal are located belong to a same frequency band pair of the reference frequency band pair.

**25.** The uplink transmission method according to claim 24, wherein the determining that the switching gap is not required between the two adjacent uplink transmissions of the terminal in a case where the frequency bands in which the two adjacent uplink transmissions of the terminal are located belong to the same frequency band pair of the reference frequency band pair comprises:

determining that the switching gap is not required between the two adjacent uplink transmissions of the terminal, in a case where the two adjacent uplink transmissions of the terminal are located in a same frequency band, and the same frequency band belongs to any one frequency band pair of the reference frequency band pair; or
determining that the switching gap is not required between the two adjacent uplink transmissions of the terminal, in a case where the two adjacent uplink transmissions of the terminal are located in two different frequency bands, and the two different frequency bands belong to a same frequency band pair of the reference frequency band pair.

**26.** The uplink transmission method according to claim 18, wherein the determining whether the switching gap is required between the two adjacent uplink transmissions of the terminal based on the association relationship between the reference frequency band pair and the uplink transmission chain comprises:

determining that the switching gap is required between the two adjacent uplink transmissions of the terminal in a case where the two adjacent uplink transmissions of the terminal are located in two different frequency bands, and the two different frequency bands do not belong to a same frequency band pair of the reference frequency band pair; or

determining that the switching gap is required between the two adjacent uplink transmissions of the terminal, in a case where the two adjacent uplink transmissions of the terminal are located in a same frequency band, the same frequency band belongs to any one frequency band pair of the reference frequency band pair, and a correspondence between the same frequency band and the uplink transmission chain changes.

27. The uplink transmission method according to claim 26, further comprising:
determining that the correspondence changes in a case where a number of uplink transmission chains corresponding to the same frequency band changes.

28. The uplink transmission method according to claim 18, wherein the determining whether the switching gap is required between the two adjacent uplink transmissions of the terminal based on the association relationship between the reference frequency band pair and the uplink transmission chain comprises:
determining that the switching gap is required between the two adjacent uplink transmissions of the terminal in a case where there are a plurality of reference frequency band pairs, and a reference frequency band pair corresponding to the two adjacent uplink transmissions of the terminal changes.

29. The uplink transmission method according to claim 17, further comprising:
determining that time domain resources occupied by any two frequency bands among the plurality of frequency bands do not overlap.

30. The uplink transmission method according to claim 29, wherein the determining whether the switching gap is required between the two adjacent uplink transmissions of the terminal comprises:

determining that the switching gap is required between the two adjacent uplink transmissions of the terminal in a case where frequency bands for the two adjacent uplink transmissions of the terminal are different; or
determining that the switching gap is required between the two adjacent uplink transmissions of the terminal in a case where frequency bands for the two adjacent uplink transmissions of the terminal are the same, and numbers of ports used for the two adjacent uplink transmissions are different.

31. The uplink transmission method according to claim 29, wherein the determining whether the switching gap is required between the two adjacent uplink transmissions of the terminal comprises:
determining that the switching gap is not required between the two adjacent uplink transmissions of the terminal in a case where frequency bands for the two adjacent uplink transmissions of the terminal are the same.

32. The uplink transmission method according to claim 31, wherein numbers of ports used for the two adjacent uplink transmissions of the terminal are the same or different.

33. An uplink transmission device, applied to a terminal, comprising:
a first determination module, configured to determine whether a switching gap is required between two adjacent uplink transmissions of the terminal in a case where the terminal supports uplink transmission switching among a plurality of frequency bands, wherein a total number of the plurality of frequency bands is greater than 2.

34. An uplink transmission device, applied to a base station, comprising:
a second determination module, configured to determine whether a switching gap is required between two adjacent uplink transmissions of a terminal in a case where the terminal supports uplink transmission switching among a plurality of frequency bands, wherein a total number of the plurality of frequency bands is greater than 2.

35. A computer-readable storage medium, wherein the computer-readable storage medium stores a computer program, and the computer program is configured to execute the uplink transmission method according to any one of claims 1 to 16.

**36.** A computer-readable storage medium, wherein the computer-readable storage medium stores a computer program, and the computer program is configured to execute the uplink transmission method according to any one of claims 17 to 32.

**37.** An uplink transmission device, comprising:

a processor; and
a memory configured to store instructions executable by the processor,
wherein the processor is configured to execute the uplink transmission method according to any one of claims 1 to 16.

**38.** An uplink transmission device, comprising:

a processor; and
a memory configured to store instructions executable by the processor,
wherein the processor is configured to execute the uplink transmission method according to any one of claims 17 to 32.

FIG. 1

FIG. 2A

FIG. 2B

FIG. 2C

whether a switching gap is required between two adjacent uplink transmissions of the terminal is determined, in a case where the terminal supports uplink transmissions switching among multiple frequency bands — 301

FIG. 3

whether a switching gap is required between two adjacent uplink transmissions of the terminal is determined based on an association relationship between a reference frequency band pair and an uplink transmission chain, where the reference frequency band pair includes one or two of the multiple frequency bands — 401

FIG. 4

a reference frequency band pair is determined — 501

↓

an association relationship is determined based on the reference frequency band pair — 502

↓

the association relationship between the reference frequency band pair and the uplink transmission chain is reported to a base station — 503

↓

whether a switching gap is required between two adjacent uplink transmissions of the terminal is determined based on the association relationship — 504

FIG. 5

indication information transmitted by a base station is received, where the indication information is used to indicate a reference frequency band pair — 601

↓

an association relationship is determined based on the reference frequency band pair — 602

↓

whether a switching gap is required between two adjacent uplink transmissions of the terminal is determined based on the association relationship — 603

FIG. 6

in a case where the terminal supports uplink transmission switching among multiple frequency bands, it is determined that the terminal does not expect simultaneous uplink transmissions on two or more frequency bands among the multiple frequency bands — 701

↓

it is determined whether a switching gap is required between two adjacent uplink transmissions of the terminal — 702

FIG. 7

whether a switching gap is required between two adjacent uplink transmissions of a terminal is determined, in a case where the terminal supports uplink transmission switching among multiple frequency bands — 801

FIG. 8

whether a switching gap is required between two adjacent uplink transmissions of the terminal is determined based on an association relationship between a reference frequency band pair and an uplink transmission chain, where the reference frequency band pair includes one or two of multiple frequency bands — 901

FIG. 9

an association relationship between a reference frequency band pair and an uplink transmission chain reported by the terminal is received — 1001

↓

whether a switching gap is required between two adjacent uplink transmissions of a terminal is determined based on the association relationship — 1002

FIG. 10

indication information is transmitted to a terminal, where the indication information is used to indicate a reference frequency band pair — 1101

the association relationship is determined based on the reference frequency band pair indicated by the indication information — 1102

whether a switching gap is required between two adjacent uplink transmissions of the terminal is determined based on the association relationship — 1103

FIG. 11

it is determined that time domain resources occupied by any two frequency bands among the multiple frequency bands do not overlap — 1201

whether the switching gap is required between the two adjacent uplink transmissions of the terminal is determined — 1202

FIG. 12

uplink transmission device

first determination module — 1301

FIG. 13

uplink transmission device

second determination module — 1401

FIG. 14

FIG. 15

FIG. 16

## INTERNATIONAL SEARCH REPORT

| International application No. |
| --- |
| **PCT/CN2022/090683** |

| A. | CLASSIFICATION OF SUBJECT MATTER |
| --- | --- |

H04W 36/00(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 上行传输, 基站, 终端, 多, 频带, 上行, 传输, 切换, 相邻, 两次, 切换时长, 频带总数, 时间, 时长, uplink transmission, base station, terminal, multi band, uplink, transmission, handover, adjacent, twice, handover duration; total frequency band

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111200853 A (HUAWEI TECHNOLOGIES CO., LTD.) 26 May 2020 (2020-05-26) description, paragraphs [0079]-[0157], figures 1-16; and claims 1-31 | 1-38 |
| A | CN 113784339 A (HUAWEI TECHNOLOGIES CO., LTD.) 10 December 2021 (2021-12-10) entire document | 1-38 |
| A | CN 113766641 A (HUAWEI TECHNOLOGIES CO., LTD.) 07 December 2021 (2021-12-07) entire document | 1-38 |
| A | CN 110121869 A (GUANGDONG OPPO MOBILE COMMUNICATIONS CO., LTD.) 13 August 2019 (2019-08-13) entire document | 1-38 |
| A | US 2016007400 A1 (SAMSUNG ELECTRONICS CO., LTD.) 07 January 2016 (2016-01-07) entire document | 1-38 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 December 2022** | **19 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 111200853 | A | 26 May 2020 | CN | 111200873 | A | 26 May 2020 |
| | | | | WO | 2020103820 | A1 | 28 May 2020 |
| | | | | JP | 2022507832 | A | 18 January 2022 |
| | | | | KR | 20210091306 | A | 21 July 2021 |
| | | | | EP | 3883315 | A1 | 22 September 2021 |
| | | | | US | 2021274483 | A1 | 02 September 2021 |
| | | | | CN | 111726873 | A | 29 September 2020 |
| | | | | CN | 111726874 | A | 29 September 2020 |
| CN | 113784339 | A | 10 December 2021 | WO | 2021249487 | A1 | 16 December 2021 |
| CN | 113766641 | A | 07 December 2021 | None | | | |
| CN | 110121869 | A | 13 August 2019 | EP | 3557828 | A1 | 23 October 2019 |
| | | | | AU | 2017391484 | A1 | 08 August 2019 |
| | | | | IL | 267842 | A | 31 October 2019 |
| | | | | JP | 2022105183 | A | 12 July 2022 |
| | | | | ZA | 201904693 | B | 29 July 2020 |
| | | | | MX | 2019008163 | A | 13 September 2019 |
| | | | | PH | 12019501576 | A1 | 02 March 2020 |
| | | | | JP | 2020515108 | A | 21 May 2020 |
| | | | | SG | 11201906285 W | A | 27 August 2019 |
| | | | | US | 2021266223 | A1 | 26 August 2021 |
| | | | | BR | 112019014021 | A2 | 11 February 2020 |
| | | | | TW | 201826834 | A | 16 July 2018 |
| | | | | WO | 2018126453 | A1 | 12 July 2018 |
| | | | | RU | 2742464 | C1 | 08 February 2021 |
| | | | | US | 2019356546 | A1 | 21 November 2019 |
| | | | | CA | 3049166 | A1 | 12 July 2018 |
| | | | | CL | 2019001877 | A1 | 25 October 2019 |
| | | | | KR | 20190103190 | A | 04 September 2019 |
| | | | | WO | 2018126665 | A1 | 12 July 2018 |
| US | 2016007400 | A1 | 07 January 2016 | KR | 20160004973 | A | 13 January 2016 |
| | | | | WO | 2016003249 | A1 | 07 January 2016 |
| | | | | EP | 3165040 | A1 | 10 May 2017 |
| | | | | CN | 106664715 | A | 10 May 2017 |

Form PCT/ISA/210 (patent family annex) (January 2015)